# EUROPEAN PATENT SPECIFICATION

(11) **EP 2 412 620 B1**
(45) Date of publication and mention of the grant of the patent: **13.03.2013**
(21) Application number: 10170913.7
(22) Date of filing: 27.07.2010
(51) Int. Cl.: B62M 3/00, B62K 19/34

(54) **Connecting and adjusting structure for crank assembly**
Verbindungs- und Einstellungsstruktur für Kurbelanordnung
Structure de connexion et d'ajustement pour ensemble manivelle

(43) Date of publication of application: 01.02.2012
(73) Proprietor: Lin, Chang Hui, Changhu (TW)
(72) Inventor: Lin, Chang Hui, Changhu (TW)
(74) Representative: Chaillot, Geneviève

(56) References cited:
- EP-A1- 1 792 821
- EP-A2- 1 975 057
- FR-A1- 2 924 088
- US-A- 1 268 351

## Description

### BACKGROUND OF THE INVENTION

### Field of the Invention

The present invention relates to a connecting and adjusting structure, and more particularly to a connecting and adjusting structure for a crank assembly of a bicycle.

### Description of the Prior Art

A conventional crank assembly of a bicycle such as disclosed in EP-1792 821 is provided to be pedaled by a rider and contains a crank device installed behind a tube member, and includes a central shaft, the central shaft includes a first and a second ball bearings disposed on two sides thereof and fixed in a bottom bracket, and a retaining ring is used to screw the central shaft with the bottom bracket. However, such a connecting method is time consuming and complicated, and a gap results from the working process to loose the crank assembly.

Moreover, the ball bearing contact with the crank at a small area or some points that will deform the crank during pedaling the pedal.

The present invention has arisen to mitigate and/or obviate the afore-described disadvantages.

### SUMMARY OF THE INVENTION

The primary object of the present invention is to provide a connecting and adjusting structure for a crank assembly which is capable of overcoming the shortcomings of the conventional a hydraulic brake.

Further object of the present invention is to provide a connecting and adjusting structure for a crank assembly that the first and the second connectors are screwed together to be further retained on two sides of the bottom bracket to eliminate a gap among the bottom bracket, the first and the second connectors and the first and the second cranks which results from the working process, and to assemble related components of bicycle and enhance stability of the rotating crank shaft while pedaling the pedal.

Another object of the present invention is to provide a connecting and adjusting structure for a crank assembly that the first and the second ball bearings of the first and the second connectors are replaced easily when they are damaged, and the retaining ring is used to retain the dustproof cover and the second ball bearing with the second crank to adjust the distance among the second crank, the bottom bracket, and the first crank quickly.

To obtain the above objectives, a connecting and adjusting structure for a crank assembly provided by the present invention contains:
a first connector, a second connector, a first crank, a second crank, a first ball bearing, a second ball bearing, a retaining ring, a dustproof cover, a screw, and a chainwheel, wherein a first tube of the first connector includes a first hollow portion formed therein, the first connector includes a first bearing seat disposed on a front end of the first tube thereof to receive the first ball bearing, and the first bearing seat includes a first engaging tab, a first adjusting rib, and the first tube mounted around a rear side thereof, the second connector includes a second bearing seat disposed on a rear end of a second tube thereof to receive the second ball bearing, the dustproof cover, and the retaining ring, the second bearing seat includes a second engaging tab, a second adjusting rib, and the second tube fixed on a front side thereof, the second crank includes a central shank disposed on a center thereof, and the central shank is hollow and includes a plurality of T-shaped teeth arranged around a distal end thereof and second internal screws arranged therein, the first crank includes a hollow post mounted on a center thereof, the hollows post includes a Tee groove fixed therein to engage with the T-shaped teeth of the central shank of the second crank, and the screw is inserted through the hollow post of the first crank to be screwed with the second internal screws of the second crank and the further features of claim 1.

### BRIEF DESCRIPTION OF THE DRAWINGS

Fig. 1 is a perspective view showing the exploded components of a connecting and adjusting structure for a crank assembly according to a preferred embodiment of the present invention;
Fig. 2 is a perspective view showing the assembly of the connecting and adjusting structure for the crank assembly according to the preferred embodiment of the present invention;
Fig. 3 is a cross sectional view showing the assembly of the connecting and adjusting structure for the crank assembly according to the preferred embodiment of the present invention;
Fig. 4 is a bottom plan view showing the assembly of the connecting and adjusting structure for the crank assembly according to the preferred embodiment of the present invention;
Fig. 5 is a front plan view showing the assembly of the connecting and adjusting structure for the crank assembly according to the preferred embodiment of the present invention;
Fig. 6 is a plan view showing the exploded components of the connecting and adjusting structure for the crank assembly according to the preferred embodiment of the present invention.

### DETAILED DESCRIPTION OF THE PREFERRED EMBODIMENTS

The present invention will be clearer from the following description when viewed together with the accompanying drawings, which show, for purpose of illustrations only, the preferred embodiment in accordance with the present invention.

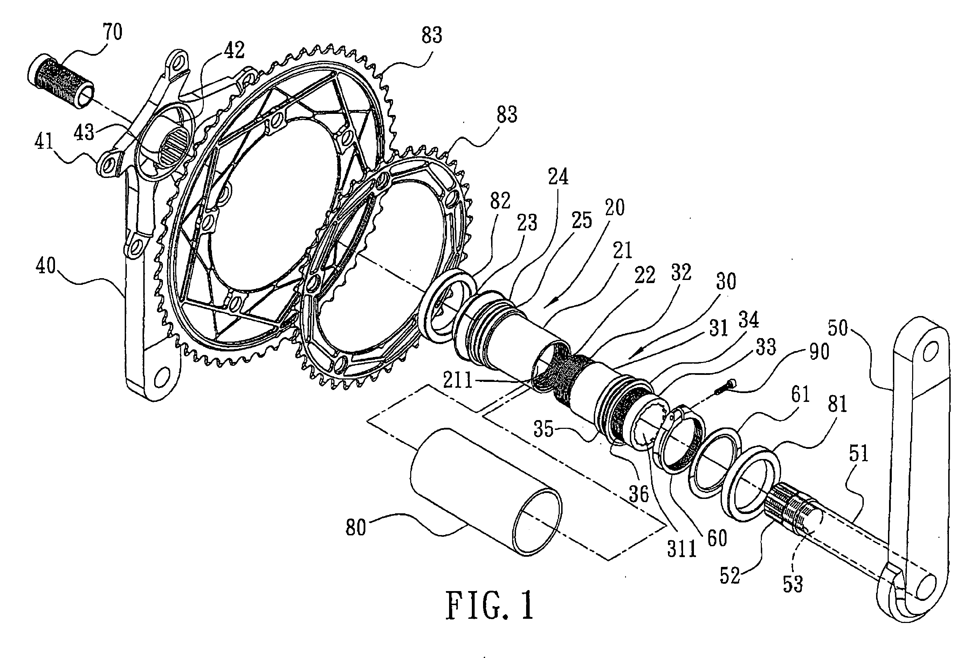

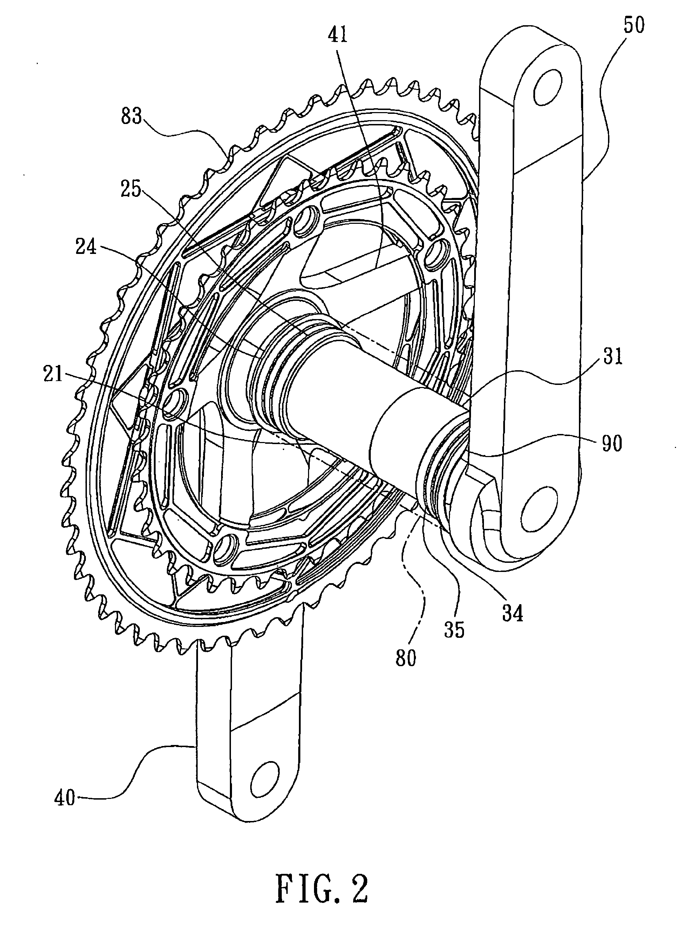

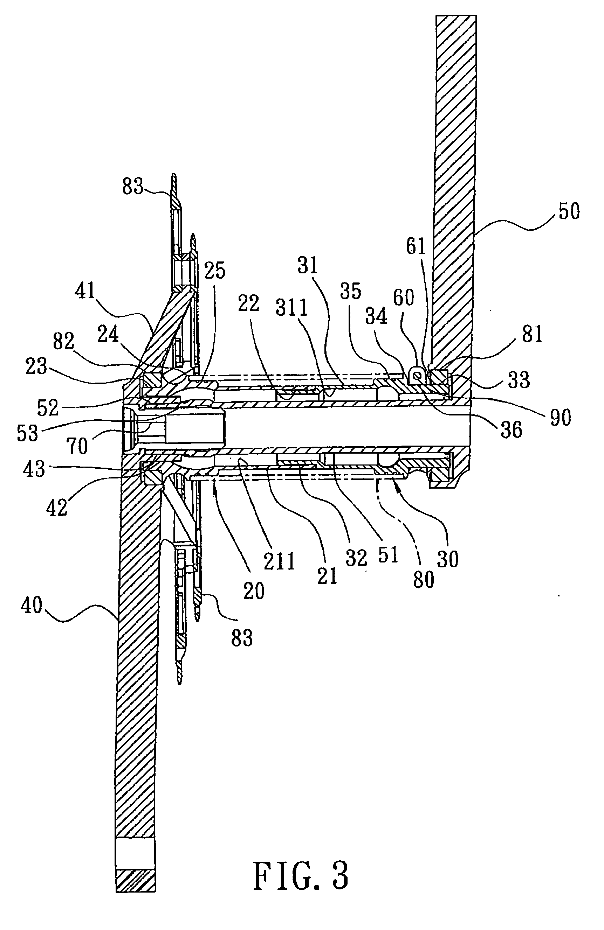

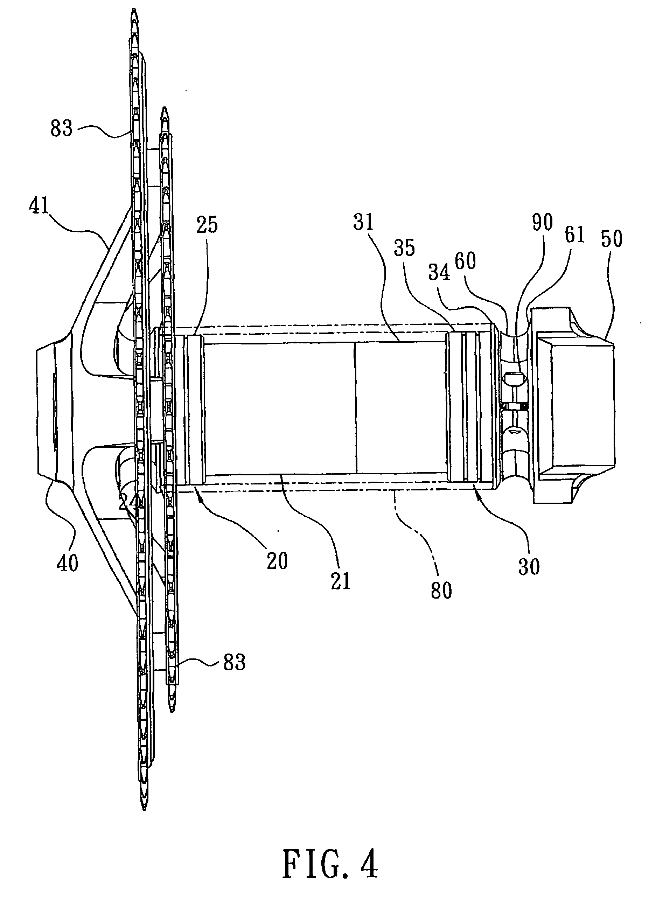

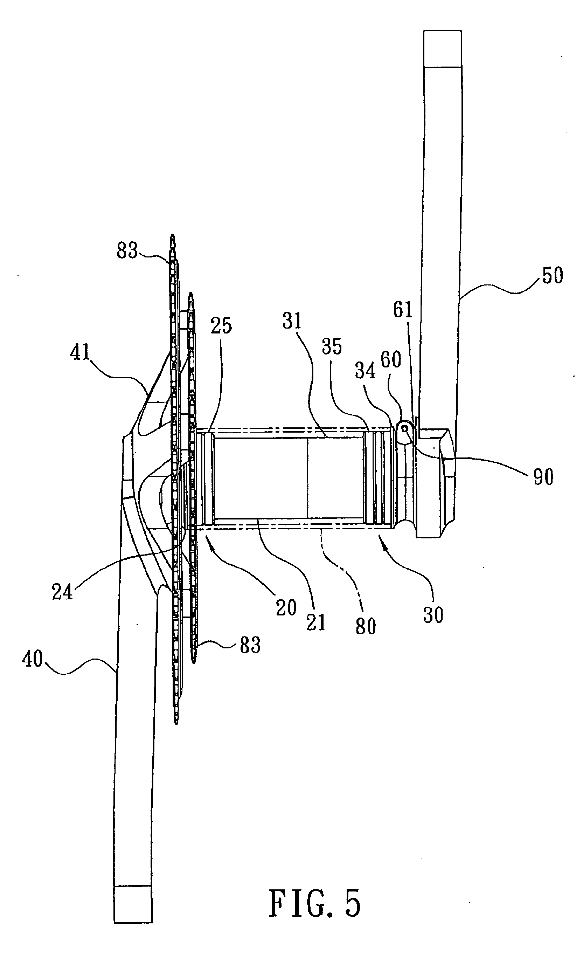

Referring to Figs. 1-6, a connecting and adjusting structure for a crank assembly in accordance with a preferred embodiment of the present invention is used in a bottom bracket 80 and a crank shaft of a bicycle, and comprises a first connector 20, a second connector 30, a first crank 40, a second crank 50, a first ball bearing 81, a second ball bearing 82, a retaining ring 60, a dustproof cover 61, a screw 70, and a chainwheel 83, wherein a first tube 21 of the first connector 20 includes a first hollow portion 211 formed therein, the first hollow portion 211 includes inner threads 22 arranged on a rear side thereof to screw with outer threads 32 of the second connector 30, the first connector 20 includes a first bearing seat 23 disposed on a front end of the first tube 21 thereof to receive the first ball bearing 81, and the first bearing seat 23 includes a first engaging tab 24, a first adjusting rib 25, and the first tube 21 mounted around a rear side thereof, a second tube 31 of the second connector 30 includes a second hollow portion 311 formed therein, and the second hollow portion 311 includes the outer threads 32 arranged on a front side thereof to screw with the inner threads 22 of the first connector 20, the second connector 30 includes a second bearing seat 33 disposed on a rear end of the second tube 31 thereof to receive the second ball bearing 82, the dustproof cover 61, and the retaining ring 60, the second bearing seat 33 includes a second engaging tab 34, a second adjusting rib 35, and the second tube 31 fixed on a front side thereof, and includes external screws 36 secured on a front end thereof to screw with first internal screws 62 of the retaining ring 60 so that the retaining ring 60 is rotated to push the dustproof cover 61 to contact with the first ball bearing 81 tightly, thus adjusting a distance among the second crank 50, the bottom bracket 80, and the first crank 40. The second crank 50 includes a central shank 51 disposed on a center thereof, and the central shank 51 is hollow and includes a plurality of T-shaped teeth 52 arranged around a distal end thereof, second internal screws 53 arranged therein. The first crank 40 includes a paw portion 41 disposed on an outer rim of an upper side thereof to lock the chainwheel 83, includes a hollow post 42 mounted on a center thereof, the hollows post 42 includes a Tee groove 43 fixed therein to engage with the T-shaped teeth 52 of the central shank 51 of the second crank 50, and then the screw 70 is inserted through the hollow post 42 of the first crank 40 to be screwed with the second internal screws 53 of the second crank 50, thus obtaining the connecting and adjusting structure of the crank assembly.

Thereby, the first and the second connectors 20, 30 are screwed together to be further retained on two sides of the bottom bracket 80 to eliminate a gap among the bottom bracket 80, the first and the second connectors 20, 30, and the first and the second cranks 40, 50 which results from the working process, and to assemble related components of bicycle and enhance stability of the rotating crank shaft while pedaling the pedal. Furthermore, the first and the second ball bearings 81, 82 of the first and the second connectors 20, 30 are replaced easily when they are damaged, and the retaining ring 60 is used to retain the dustproof cover 61 and the second ball bearing 82 with the second crank 50 to adjust the distance among the second crank 50, the bottom bracket 80, and the first crank 40 quickly.

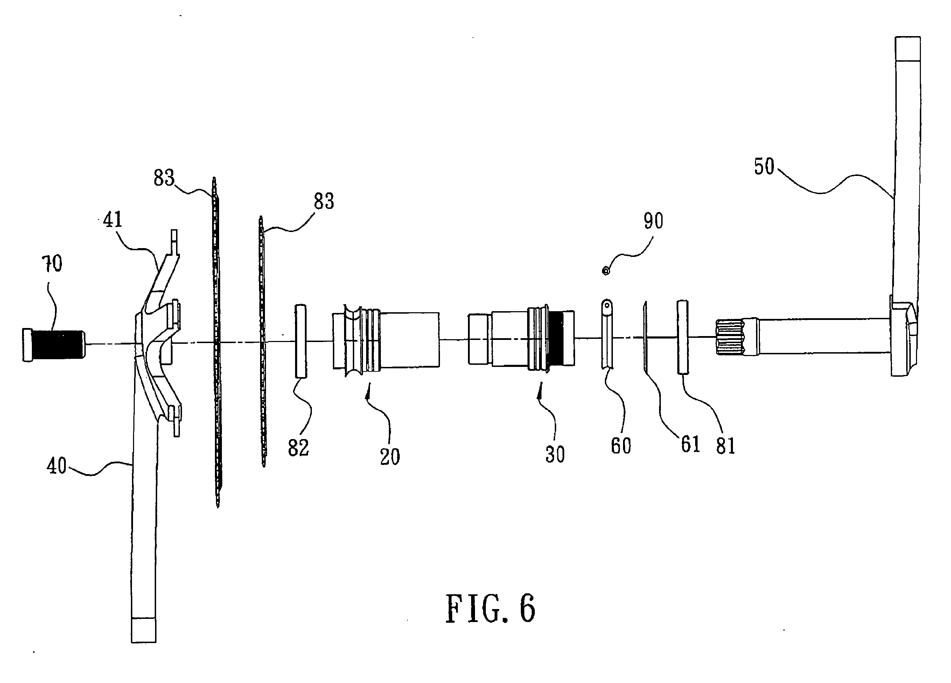

As shown in Fig. 6, in assembly, the first and the second connectors 20, 30 are screwed together to be retained on the two sides of the bottom bracket 80 and further to be connected with a bicycle frame, and then the paw portion 41 of the first crank 40 is coupled with the chainwheel 83 and the second ball bearing 82 and is further fitted to the first connector 20, thereafter the retaining ring 60 and the dustproof cover 61 are fitted into the second bearing seat 33 of the second connector 30 so that the second crank 50 is connected with the first ball bearing 81 and fitted into the second connector 30, and then the screw 70 is inserted into the hollows post 42 of the first crank 40 to screw with the second internal screws 53 so that the first and the second cranks 40, 50 are retained tightly with each other, and the retaining ring 60 is rotated tightly to adjust the first ball bearing 81 and the distance among the second crank 50, the bottom bracket 80, and the first crank 40, thereafter a screwing element 90 is applied to engage the retaining ring 60 with the second bearing seat 33 of the second connector 30, thus finishing assembly.

While we have shown and described various embodiments in accordance with the present invention, it is clear to those skilled in the art that further embodiments may be made without departing from the scope of the present invention.

## Claims

1. A crank assembly including a connecting and adjusting structure for a bottom bracket (80) and a crank shaft of a bicycle, comprising a first connector (20), a second connector (30), a first crank (40), a second crank (50), a first ball bearing (81), a second ball bearing (82), a retaining ring (60), a dustproof cover (61), a screw (70), and a chainwheel (83), wherein a first tube (21) of the first connector (20) includes a first hollow portion (211) formed therein, the first connector (20) includes a first bearing seat (23) disposed on a front end of the first tube (21) thereof to receive the first ball bearing (81), and the first bearing seat (23) includes a first engaging tab (24), a first adjusting rib (25), and the first tube (21) mounted around a rear side thereof, the second connector (30) includes a second bearing seat (33) disposed on a rear end of a second tube (31) thereof to receive the second ball bearing (82), the dustproof cover (61), and the retaining ring (60), the second bearing seat (33) includes a second engaging tab (34), a second adjusting rib (35), and the second tube (31) fixed on a front side thereof, the second crank (50) includes a central shank (51) disposed on a center thereof, and the central shank (51) is hollow and includes a plurality of T-shaped teeth (52) arranged around a distal end thereof and second internal screws (53) arranged therein, the first crank (40) includes a hollow post (42) mounted on a center thereof, the hollow post (42) includes a Tee groove (43) fixed therein to engage with the T-shaped teeth (52) of the central shank (51) of the second crank (50), and the screw (70) is inserted through the hollow post (42) of the first crank (40) to be screwed with the second internal screws (53) of the second crank (50);
wherein the first hollow portion (211) includes inner threads (22) arranged on a rear side thereof to screw with outer threads (32) of the second connector (30);
wherein the second bearing seat (33) includes external screws (36) secured on a front end thereof to screw with first internal screws (62) of the retaining ring (60) so that the retaining ring (60) is rotated to push the dustproof cover (61) to contact with the first ball bearing (81) tightly.

2. The crank assembly as claimed in claim 1, wherein the first crank (40) includes a paw portion (41) disposed on an outer rim of an upper side thereof to lock the chainwheel (83).

## Patentansprüche

1. Kurbelanordnung, die eine Verbindungs- und Einstellungsstruktur für ein Tretlager (80) und eine Kurbelwelle eines Fahrrads aufweist, umfassend ein erstes Verbindungselement (20), ein zweites Verbindungselement (30), eine erste Kurbel (40), eine zweite Kurbel (50), ein erstes Kugellager (81), ein zweites Kugellager (82), einen Haltering (60), eine staubdichte Abdeckung (61), eine Schraube (70) und ein Kettenblatt (83), wobei ein erstes Rohr (21) des ersten Verbindungselements (20) einen ersten hohlen Abschnitt (211) aufweist, der darin geformt ist, das erste Verbindungselement (20) einen ersten Lagersitz (23) aufweist, der an einem vorderen Ende des ersten Rohrs (21) davon angeordnet ist, um das erste Kugellager (81) aufzunehmen, und der erste Lagersitz (23) ein erstes Berührungselement (24), eine erste Einstellrippe (25) und das erste Rohr (21) aufweist, das um eine hintere Seite davon montiert ist, das zweite Verbindungselement (30) einen zweiten Lagersitz (33) aufweist, der an einem hinteren Ende eines zweiten Rohrs (31) davon angeordnet ist, um das zweite Kugellager (82), die staubdichte Abdeckung (61) und den Haltering (60) aufzunehmen, der zweite Lagersitz (33) ein zweites Berührungselement (34), eine zweite Einstellrippe (35) und das zweite Rohr (31) aufweist, das an einer Vorderseite davon befestigt ist, die zweite Kurbel (50) einen mittigen Schaft (51) aufweist, der an einer Mitte davon angeordnet ist, und der mittige Schaft (51) hohl ist und eine Vielzahl von T-förmigen Zähnen (52) aufweist, die um ein distales Ende davon angeordnet sind, und zweite innere Schrauben (53), die darin angeordnet sind, die erste Kurbel (40) eine hohle Stütze (42) aufweist, die an einer Mitte davon montiert ist, die hohle Stütze (42) eine T-Nut (43) aufweist, die darin befestigt ist, um in Eingriff mit den T-förmigen Zähnen (52) des mittigen Schafts (51) der zweiten Kurbel (50) zu gelangen, und die Schraube (70) durch die hohle Stütze (42) der ersten Kurbel (40) geführt ist, um mit den zweiten inneren Schrauben (53) der zweiten Kurbel (50) verschraubt zu werden;
wobei der erste hohle Abschnitt (211) Innenwindungen (22) aufweist, die an einer hinteren Seite davon angeordnet sind, um mit Außenwindungen (32) des zweiten Verbindungselements (30) verschraubt zu werden;
wobei der zweite Lagersitz (33) äußere Schrauben (36) aufweist, die an einem vorderen Ende davon gesichert sind, um mit ersten inneren Schrauben (62) des Halterings (60) verschraubt zu werden, sodass der Haltering (60) gedreht wird, um die staubdichte Abdeckung (61) zu schieben, bis sie dicht Kontakt mit dem ersten Kugellagersitz (81) hat.

2. Kurbelanordnung nach Anspruch 1, wobei die erste Kurbel (40) einen Klauenabschnitt (41) aufweist, der an einem Außenrand einer Oberseite davon angeordnet ist, um das Kettenblatt (83) zu arretieren.

## Revendications

1. Ensemble manivelle comprenant une structure de liaison et d'ajustement pour une boîte de pédalier (80) et un arbre de pédalier d'un vélo, comprenant un premier raccord (20), un second raccord (30), une première manivelle (40), une seconde manivelle (50), un premier roulement à billes (81), un second roulement à billes (82), un anneau de retenue (60), un couvercle antipoussière (61), une vis (70) et un plateau de pédalier (83), dans lequel un premier tube (21) du premier raccord (20) comprend une première partie creuse (211) formée dans celui-ci, le premier raccord (20) comprend un premier siège de roulement (23) disposé sur une extrémité avant du premier tube (21) de celui-ci pour recevoir le premier roulement à billes (81), et le premier siège de roulement (23) comprend une première languette d'engagement (24), une première nervure d'ajustement (25) et le premier tube (21) monté autour d'un côté arrière de celui-ci, le second raccord (30) comprend un second siège de roulement (33) disposé sur une extrémité arrière d'un second tube (31) de celui-ci pour recevoir le second roulement à billes (82), le couvercle antipoussière (61) et l'anneau de retenue (60), le second siège de roulement (33) comprend une seconde languette d'engagement (34), une seconde nervure d'ajustement (35) et le second tube (31) fixé sur un côté avant de celui-ci, la seconde manivelle (50) comprend une tige centrale (51) disposée sur un centre de celle-ci, et la tige centrale (51) est creuse et comprend une pluralité de dents en forme de T (52) agencées autour d'une extrémité distale de celle-ci et des secondes vis internes (53) agencées dans celle-ci, la première manivelle (40) comprend un montant creux (42) monté sur un centre de celle-ci, le montant creux (42) comprend une rainure en forme de T (43) fixée dans celui-ci pour venir en prise avec les dents en forme de T (52) de la tige centrale (51) de la seconde manivelle (50), et la vis (70) est introduite à travers le montant creux (42) de la première manivelle (40) pour être vissée avec les secondes vis internes (53) de la seconde manivelle (50) ;
la première partie creuse (211) comportant des filets internes (22) agencés sur un côté arrière de celle-ci pour être vissés avec des filets externes (32) du second raccord (30) ;
le second siège de roulement (33) comprenant des vis externes (36) fixées sur une extrémité avant de celui-ci pour être vissées avec des premières vis internes (62) de l'anneau de retenue (60) de telle sorte que l'anneau de retenue (60) est amené à tourner pour pousser le couvercle antipoussière (61) à venir en contact avec le premier roulement à billes (81) de manière étanche.

2. Ensemble manivelle selon la revendication 1, dans lequel la première manivelle (40) comprend une partie à pattes (41) disposée sur un rebord externe d'un côté supérieur de celle-ci pour verrouiller le plateau de pédalier (83).
